# EUROPEAN PATENT SPECIFICATION

(11) **EP 0 595 882 B1**
(45) Date of publication and mention of the grant of the patent: **04.12.1996**
(21) Application number: 92915421.9
(22) Date of filing: 20.07.1992
(51) Int. Cl.: A01F 29/04, A01F 12/40, A01D 41/12

(54) **CHOPPER**
HÄCKSLER
MACHINE A HACHER

(30) Priority: 22.07.1991 SE 9102217
(43) Date of publication of application: 11.05.1994
(73) Proprietor: REKORDVERKEN SWEDEN AB, S-535 00 Kvänum (SE)
(72) Inventor: HOLMEN, Bengt, S-532 74 Skara (SE)
(74) Representative: Lindberg, Klas Valter Bo
(86) International application number: SE9200525
(87) International publication number: WO9301708

(56) References cited:
- EP-A- 0 415 419
- WO-A-87/01903
- DE-B- 1 050 590
- FR-A- 1 208 770
- US-A- 2 626 159
- US-A- 4 612 941

## Description

The subject invention concerns a straw chopper comprising a rotor with knives mounted thereon, oppositely positioned counter-knives, the latter knives interacting with the rotor-mounted knives and being adjustable as to their position in order to diminish or increase, according to wish, the through-flow and degree of comminution of various types of material to be chopped, a first guide provided ahead of the counter-knives, as seen in the direction of rotation of the chopper rotor, and being adjustable as to its position with respect to the chopper rotor and of the same longitudinal extension as the chopper rotor, and a guiding edge provided on said first guide and directed towards the outer free ends of the rotor-mounted knives in order to force the material to be chopped onto the chopper rotor.

In accordance with one conventional prior-art chopper of the type defined above, see for example FR-A-1 208 770, an adjustable guide plate is provided with a surface facing the outer free ends of the rotor-mounted knives and spaced but a small distance from said knife ends in order to guide the inflow of material to be chopped towards the rotor-mounted knives.

This distance is however fixed, irrespective of the position in which the counter-knives are set.

When the counter-knives are set in a position to provide maximum chopping effect they are adapted for chopping such materials as normal dry straw, usually originating from wheat, barley, rye and oat. In this case, said distance should be as small as possible in order to achieve optimum chopping and comminution of the material.

When material originating e.g. from corn, sun-flowers and similar varieties comprising comparatively large and hard plant pieces, are to be chopped and comminuted, the counter-knives are set in a position for minimum chopping or alternatively the counter-knives are dismantled from the chopper in order to minimize the risk that they be damaged by the hard plant pieces.

Since the distance between said guide plate surface and the outer free ends of the rotor-mounted knives is unchangeable, the hard plant pieces are able to penetrate comparatively easily into the gap formed between the guide plate and the outer free ends of the rotor-mounted knives, and even into the interspaces between the juxtaposed rotor-mounted knives, with consequential obstruction and damages to the components incorporated in the chopper.

The purpose of the invention is to suggest a chopper of the type outlined in the afore-going, providing maximum chopping and comminution of such materials as straw and minimizing the risks of obstruction and damages when hard plant pieces are being chopped and comminuted.

This purpose is achieved in accordance with the invention in that a second guide is provided after the counter-knives, as seen in the direction of rotation of the rotor-mounted knives, said second guide being adjustable as to its position with respect to the chopper rotor and having substantially the same extension as said rotor, in that a guiding edge is provided on said second guide and is directed towards the outer free ends of the rotor-mounted knives in order to force the material to be chopped into the chopper rotor, and in that the distance between each guiding edge and the outer free ends of the rotor-mounted knives increases as the setting of the counter-knives is changed from a position for maximum chopping to a position for minimum chopping, and in that in and closest to the position for minimum chopping the counter-knives are entirely retracted from the rotor-mounted knives.

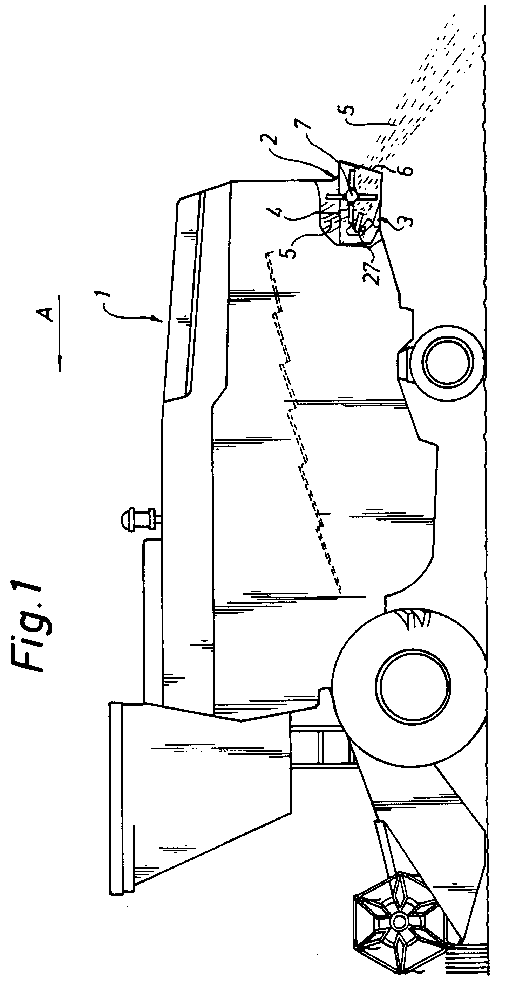

The invention will be described in closer detail with reference to the accompanying drawings, wherein
Fig. 1 illustrates schematically and in a lateral and partly cut view a combine harvester equipped with an improved straw chopper in accordance with the invention,
Fig. 2 illustrates the chopper in accordance with Fig. 1 in the chopping position as seen in an end view and in cross-section, and
Figs. 3 and 4 illustrate the chopper in accordancae with Fig. 2 in two other chopping positions.

The combine harvester designated generally by numeral 1 is of conventional construction with the exception that it is provided with the improved straw chopper in accordance with the invention, generally designated by numeral 2, and for this reason neither the construction nor the function of the combine harvester will be described in closer detail herein.

In the conventional manner the chopper 2 is positioned at the rear end of the combine harvester 1 as seen in the direction of advancement A, and it comprises a housing 3 with an inlet 4 through which threshed but not yet chopped material 5, usually straw from wheat, barley, rye or oat as also different kinds of oil-plants, corn, sun-flower and the like, is fed into the chopper, and with an outlet 6 for discharge of the chopped and comminuted material 5.

The housing 3 encloses a chopper rotor 7 which is mounted therein by means of bearings, not shown, in such a manner that it may rotate in the direction B about an essentially horizontal shaft 8 of rotation. The chopper rotor 7 is rotated in the direction indicated by means of a driving mechanism, not either shown, of conventional construction. The chopper rotor 7 has several juxtaposed groups of essentially radially directed knives 9, the number of which may amount e.g. to 40 - 50 with an intercentre distance of approximately 25 mm.

To chop up the material 5, the rotor-mounted knives 9 interact with counter-knives 10, the latter being of equal number to the knives 9 and arranged to be set as to their position in a manner to be described in closer detail in the following in order to increase or reduce, according to wish, the through-flow as well as the extent of communition of the different types of material 5 to be chopped.

One upper and one lower guide 11 and 12 are arranged respectively ahead of and after the counter-knives 10 as seen in the direction of rotation B of the chopper rotor 7, which guides 11, 12 are movable relatively the chopper rotor 7 and have essentially the same extension longitudinally as said rotor 7. The guides are formed with guide edges 14 and 15 directed towards the outer free ends 13 of the rotor-mounted knives 9 the purpose of which is to force the material 5 to be chopped into engagement with the chopper rotor 7 ahead of as well as after the counter-knives in order to achieve the best possible and most efficient chopping and communition of the material 5 to be chopped.

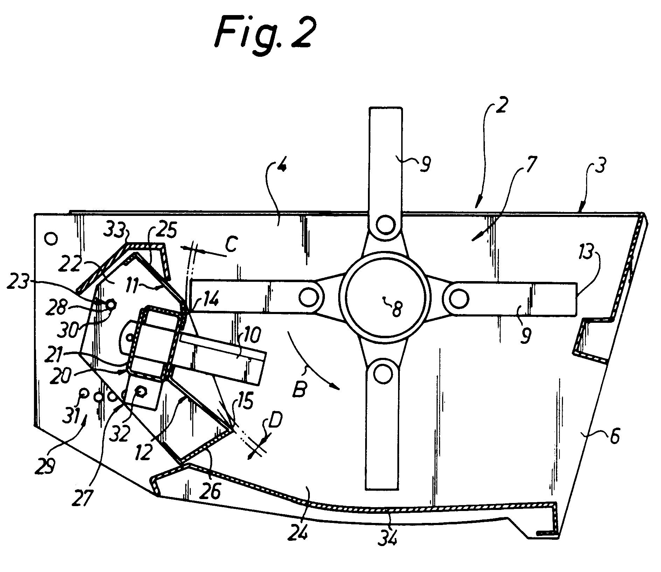

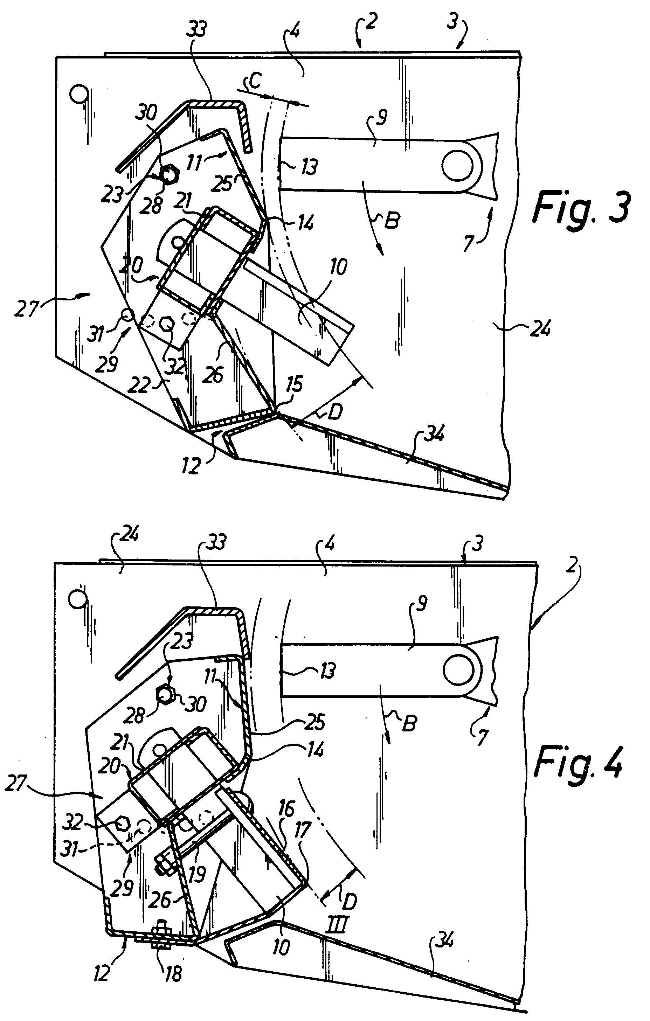

The distance C between the guide edge 14 of the upper guide 11 and the outer free ends 13 of the rotor-mounted knives 9, and the distance D between the guide edge 15 of the lower guide 12 and the free ends 13 are variable and are increased when the setting of the counter-knives 10 is changed from position I according to Fig. 2, which position corresponds to maximum chopping, to position III according to Fig. 4, which position corresponds to minimum chopping, via one of several intermediate positions II according to Fig. 3, and inversely.

In maximum chopping position I, dry straw is chopped, normally, since in this case it is important that distances C and D are short and that the straw is forced into engagement with the rotor-mounted knives 9 ahead of as well as after the counter-knives 10 while being affected by the upper and the lower guide edges 14, 15 to ensure the best possible and most efficient straw chopping and communition results. On the other hand, it is necessary to increase the distances C and D, when moist straw or when e.g. oil plants are to be chopped. For instance, when corn and sun flowers, having hard plant parts, are to be chopped, the counter-knives 10 are set in the minimum chopping position III, and in this position distances C and D are at their maximum value in order to allow hard plant pieces to pass between the spaces separating the respective guide edges 14 and 15 from the outer free ends 13 of the rotor-mounted knives 9, without causing damage to either the rotor-mounted knives 9, the counter-knives 10, or to any other component of the chopper 2.

In and closest to chopping position III for minimum chopping of material 5 containing hard plant pieces, the counter-knives 10 are entireley retracted from the rotor-mounted knives 9, see Fig. 4, to further reduce the risk that such pieces damage the counter-knives 10, and in this position the knives 10 may be covered by a protective element 16 which in this case replaces the lower guide 12 and is formed with a guide edge 17 corresponding to the guide edge 15 of the lower guide 12. In accordance with the illustrated embodiment, the protective cover 16 preferably is in the shape of a protective plate which may be attached to the lower guide 12 by suitable fasteners 18, such as bolts, and may be clamped to the upper face of the counter-knives 10 by suitable clamping means 19, which also in this case may be in the form of e.g. bolts.

The counter-knives 10 are mounted on a support or carrier 20 which extends essentially in parallel with the chopper rotor 7 and essentially along the entire length of said rotor. The support 20 is movably secured to the housing 3 to allow setting of the counter-knives 10 in the desired one of chopping positions I-III. To this end, the support 20 of the counter-knives 10 is shaped as an elongate, hollow sheeting profile member 21 composed of two L-shaped profile members, and end-wall plates 22 are connected to the sheeting profile member 21 at the ends of the latter. A joint 23 at either side pivotally connects each end-wall plate 22 to side plates 24 which delimit the housing 3 laterally.

The upper and the lower guides 11, 12 are in the shape of covering plates 25, 26 which are connected to the sheeting profile member 21 and the end-wall plates 22, and the profile member 21 together with the end-wall plates 22 and the covering plates 25, 26 form a counter-knife beam 27.

Each joint 23 preferably is in the shape of a pivot pin 28 which extends through its associated side plate 24 and associated end-wall plate 22 to be secured therein in any suitable manner allowing movement of the counter-knife beam 27 and thus of the counter-knives 10 between positions I and III.

A setting means 29 is provided to allow setting of the counter-knives in the desired one of positions I-III, said means allowing stepwise and/or continuous setting of the counter-knives 10.

The setting means 29 comprises recesses 30 formed in the counter-knife beam 27, more precisely one such recess 30 in each end-wall plate 22, and a row of apertures 31 extending along a radius the centre of which is the adjacent joint 23, and also a setting bolt 32 which is arranged to be inserted into the recess 30 and a selected aperture 31 to secure the counter-knives 10 in the desired setting position I-III.

Instead of the row of apertures 31, an arcuately curved slit, not shown, may be provided, the radius of which is centered in the adjacent pivot joint 23.

Owing to the construction described in the aforegoing the counter-knife beam 27, and consequently the counter-knives 10, are allowed to pivot about the pivot points 23 and may be secured in the desired chopping position with the aid of the setting means 29.

In accordance with an alternative embodiment the pivot joints 23 and the setting means 29 may be replaced by other kinds of setting means, not shown, allowing a more or less parallel displacement of the counter-knife beam 27 towards and away from the chopper rotor 7 and thus the outer free ends 13 of the rotor-mounted knives 9.

As a further alternative, the setting means may be in the form of hydraulically, pneumatically, electrically or similarly operated setting means, not shown, acting between the counter-knife beam 27 and a fixed point on the housing 3.

In order both to protect the counter-knife beam 27 and reinforce the housing 3 a stay plate 33 is provided above the counter-knife beam 27, said stay plate being interconnected with the side plates 24 of the housing 3 in any suitable manner, such as by welding.

In addition, a bottom plate 34 is arranged below the counter-knife beam 27 and the chopper rotor 7, and the bottom plate 34 is attached to the side plates 24 of the housing 3 in any suitable manner, such as by welding. The bottom plate 34 also serves as a reinforcement to strengthen the housing 3 and forms the housing bottom, and it extends up to the outlet 6 from the housing 3 for the purpose of directing the chopped material 5 towards and through the outlet 6.

Naturally, the invention should not be considered limited to the embodiments shown and described herein but may be modified optionally in various ways within the scope of protection of the appended claims.

## Claims

1. A straw chopper (2) comprising a rotor (7) with knives (9) mounted thereon, counter-knives (10), the latter knives interacting with the rotor-mounted knives (9) and being adjustable as to their position in order to diminish or increase, according to wish, the through-flow and degree of comminution of various types of material (5) to be chopped, a first guide (11) provided ahead of the counter-knives (10), as seen in the direction (B) of rotation of the chopper rotor (7), and being adjustable as to its position with respect to the chopper rotor and of the same longitudinal extension as the chopper rotor, and a guiding edge (14) provided on said first guide (11) and directed towards the outer free ends (13) of the rotor-mounted knives (9) in order to force the material (5) to be chopped onto the chopper rotor (7), **characterized** in that a second guide (12; 16) is provided after the counter-knives (10), as seen in the direction (B) of rotation of the chopper rotor (7), said second guide being adjustable as to its position with respect to the chopper rotor (7) and having substantially the same extension as said rotor (7), in that a guiding edge (15; 17) is provided on said second guide (12; 16) and is directed towards the outer free ends (13) of the rotor-mounted knives (9) in order to force the material (5) to be chopped into the chopper rotor (7), and in that the distance (C, D) between each guiding edge (14 and 15; 17) and the outer free ends (13) of the rotor-mounted knives increases as the setting of the counter-knives (10) is changed from a position (I) for maximum chopping to a position (III) for minimum chopping and in that in and closest to the position (III) for minimum chopping the counter-knives (10) are entirely retracted from the rotor-mounted knives (9).

2. A straw chopper as claimed in claim 1, **characterized** in that the counter knives (10) are covered by a protective member (16), said member serving as a replacement for the second guide (12) and having a guiding edge (17) corresponding to the guiding edge (15) of said second guide (12), and said member being formed by a protective plate (16) which is attached to the lower guide (12) and fastened to the upper face of the counter-knives (10).

## Patentansprüche

1. Strohhäcksler (2), der einen Rotor (7) mit daran angebrachten Messern (9), Gegenmesser (10), wobei letztere Messer mit den an dem Rotor angebrachten Messern (9) in Wechselwirkung stehen und ihre Position verstellt werden kann, um je nach Wunsch, den Durchlauf und den Grad der Zerkleinerung verschiedener Arten zu häckselnden Materials (5) zu verringern oder zu vergrößern, eine erste Führung (11), die, in der Richtung (B) der Drehung des Häckslermotors (7) gesehen, vor den Gegenmessern (10) vorhanden ist, deren Position in bezug auf den Häckslerrotor verstellt werden kann und die die gleiche Längsausdehnung aufweist wie der Häckslerrotor, und eine Führungskante (14) umfaßt, die an der ersten Führung (11) vorhanden und auf die äußeren freien Enden (13) der an dem Rotor angebrachten Messer (9) zu gerichtet ist, um das zu häckselnde Material (5) auf den Häckslerrotor (7) zu drücken, **dadurch gekennzeichnet**, daß eine zweite Führung (12; 16), in der Richtung (B) der Drehung des Häckslerrotors (7) gesehen, hinter den Gegenmessern (10) vorhanden ist, wobei die Position der zweiten Führung in bezug auf den Häckslerrotor (7) verstellt werden kann und sie im wesentlichen die gleiche Ausdehnung hat wie der Rotor (7), daß eine Führungskante (15; 17) an der zweiten Führung (12; 16) vorhanden und auf die äußeren freien Enden (13) der an dem Rotor angebrachten Messer (9) zu gerichtet ist, um das zu häckselnde Material (5) in den Häckslerrotor (7) zu drücken, und daß der Abstand (C, D) zwischen jeder Führungskante (14 und 15; 17) und den äußeren freien Enden (13) der an dem Rotor angebrachten Messer zunimmt, wenn die Einstellung der Gegenmesser (10) von einer Position (I) zum maximalen Häckseln in eine Position (III) zum minimalen Häckseln verändert wird, und daß die Gegenmesser (10) in der Position (III) zum minimalen Häckseln und am nächsten daran vollständig von den an dem Rotor angebrachten Messern (9) zurückgezogen sind.

2. Strohhäcksler nach Anspruch 1, **dadurch gekennzeichnet, daß** die Gegenmesser (10) durch ein Schutzelement (16) abgedeckt sind, wobei das Element als Ersatz für die zweite Führung (12) dient und eine Führungskante (17) hat, die der Führungskante (15) der zweiten Führung (12) entspricht, und das Element durch eine Schutzplatte (16) gebildet wird, die an der unteren Führung (12) angebracht und an der Oberseite der Gegenmesser (10) befestigt ist.

## Revendications

1. Broyeur (2) de paille, comprenant un rotor (7) muni de couteaux (9) montés sur celui-ci, des contre-couteaux (10), ces derniers couteaux interagissant avec les couteaux (9) montés sur le rotor et étant réglables dans leur position de manière à réduire ou à augmenter, selon les besoins, la section de passage et le degré de broyage des différents types de matières (5) à hacher, un premier guide (11) prévu en amont des contre-couteaux (10), vu dans le sens (B) de rotation du rotor (7) du broyeur, et dont la position par rapport au rotor du broyeur est réglable, le guide présentant la même étendue longitudinale que le rotor du broyeur, et un bord de guidage (14) prévu sur ledit premier guide (11) et orienté vers les extrémités libres extérieures (13) des couteaux (9) montés sur le rotor, de manière à forcer la matière (5) à hacher contre le rotor (7) du broyeur,
caractérisé en ce qu'un deuxième guide (12; 16) est prévu en aval des contre-couteaux (10), vu dans le sens (B) de rotation du rotor (7) du broyeur, la position dudit second guide par rapport au rotor (7) du broyeur étant réglable, et le guide présentant essentiellement la même étendue que ledit rotor (7),
en ce qu'un bord de guidage (15; 17) est prévu sur ledit deuxième guide (12; 16) et est orienté vers les extrémités libres extérieures (13) des couteaux (9) montés sur le rotor, de manière à forcer la matière (5) à hacher dans le rotor (7) du broyeur,
et en ce que la distance (C, D) entre chaque bord de guidage (14 et 15; 17) et les extrémités libres extérieures (13) des couteaux montés sur le rotor augmente lorsque le réglage des contre-couteaux (10) est modifié en étant amené d'une position (I) de broyage maximal vers une position (III) de broyage minimal, et en ce qu'en position (III) de broyage minimal, et à proximité de cette position, les contre-couteaux (10) sont entièrement rétractés par rapport aux couteaux (9) montés sur le rotor.

2. Broyeur de paille selon la revendication 1, caractérisé en ce que les contre-couteaux (10) sont recouverts par un élément de protection (16), ledit élément servant de remplacement pour le second guide (12) et comportant un bord de guidage (17) correspondant au bord de guidage (15) du second guide (12), ledit élément étant formé par une plaque de protection (16), qui est reliée au guide inférieur (12) et est fixée sur la face supérieure des contre-couteaux (10).
